# EUROPEAN PATENT SPECIFICATION

(11) **EP 2 284 430 B1**
(45) Date of publication and mention of the grant of the patent: **29.08.2012**
(21) Application number: 08876662.1
(22) Date of filing: 28.11.2008
(51) Int. Cl.: F16L 37/091, F16L 37/10, F16L 37/113

(54) **ONE-TOUCH JOINT FOR PIPING**
SCHNELLVERBINDUNG FÜR ROHRLEITUNGEN
RACCORD DE TUYAUTERIE POUVANT ÊTRE INSTALLÉ EN UNE SEULE ACTION

(30) Priority: 31.07.2008 WO PCT/JP2008/063756
(43) Date of publication of application: 16.02.2011
(73) Proprietor: O.N. Industries CO. LTD., Okayama 708-0015 (JP)
(72) Inventor: OHARA, Koji, tsuyama-shi Okayama 708-0015 (JP); TSUNETO, Kazuharu, tsuyama-shi Okayama 708-0015 (JP)
(74) Representative: Hauck Patent- und Rechtsanwälte
(86) International application number: PCT/JP2008/071706
(87) International publication number: WO 2010/013364

(56) References cited:
- EP-A1- 0 272 988
- WO-A1-00/36327
- JP-A- 10 019 176
- JP-A- 2001 263 558
- JP-A- 2001 349 488
- JP-A- 2003 161 391
- JP-A- 2005 321 095
- JP-A- 2006 097 879
- JP-U- 57 164 386

## Description

### TECHNICAL FIELD

The present invention relates to a one touch pipe joint which can be firmly coupled to a pipe with a simple operation.

### BACKGROUND ART

Coupling pipes such as water pipes or raceways provided within rooms in a building to a joint must be carried out quickly and firmly, because there are a lot of such operations depending on the scale of the building and the number of rooms within the building. One example of joints according to inventions that address such a demand is a one touch joint disclosed in Japanese Unexamined Patent Application Publication No. 2000249268. The joint according to this background art is configured such that, when connecting a pipe to a joint main body, an external thread provided for the joint main body is threaded with an internal thread provided for a cap member so that a lock ring and such in a disc spring shape provided with a regulation piece at an inner circumferential surface of the ring is fixed. Then, the pipe is inserted into the joint main body through the cap member, and the regulation piece of the lock ring is engaged with an outer circumference of the pipe, thereby preventing the pipe from falling out. However, the joint main body and the cap member are coupled by threading according to this configuration, and this can adversely make the coupling loose over time, thereby causing a leakage or causing the pipe to fall out.

In order to address the above problem, for example, a one touch joint disclosed in Japanese Unexamined Patent Application Publication No. 2003-042369 has been proposed. The joint according to this background art is configured such that, a regulation ring provided with a regulation member, which bites into an outer circumferential surface of a pipe and prevents the pipe from falling out, for an inner circumference of the ring is fixed between a ring member and a tubular member at an end portion on an opening side of the joint main body, and such that the tubular member is held by a retaining member and fixed to the joint main body by caulking. This configuration is the same as the former conventional art in that, when the pipe is pushed into the tubular member, the regulation member of the regulation ring is brought into contact with the outer circumferential surface of the pipe, and when a force in a direction in which the pipe is pulled out is applied to the pipe, the regulation member bites into the outer circumferential surface and effectively prevents the pipe from falling out. The configuration of the latter conventional art is different from the former conventional art in that the joint main body and the retaining member are connected by caulking the end portion of the joint main body instead of threading the external thread and the internal thread.

EP 0 272 988 A1 discloses a connection device comprising a tubular body with an internal abutment and an uncoupling pusher. On the one hand, the protective collar has, on the side of the claw collar, a non-concave face, and the diameter of its bore is slightly greater than the external diameter of the tube so that, when in operation, it bears against the claw collar by way of the corresponding edge of its bore. On the other hand, the length of the uncoupling pusher is such that, in the normal use position, under thrust from the device, the claw collar, which is displaced in the direction of the withdrawal of the tube by action of the pressure, bears, by way of its central part, against the inner end of the pusher and not by way of its periphery againgst the inner end of its tubular retaining nut.
WO 00/36327 discloses a fluid coupling having an outer housing with an internal bore, an O-ring fitted within the bore, a spacer bushing fitted against the O-ring, a gripper ring fitted against the axially outer side of the spacer ring, the gripper ring having axially and radially inwardly protuding circumferentially spaced gripping teeth, the teeth arranged for providing a twist when subjected to simultaneous rearward axial and rotational forces, and an end bushing holding the gripper ring, spacer bushing and O-ring within the outer housing. A fluid coupling having an outer housing with internal bore, an O-ring seal fitted within the bore, a spacer bushing fitted against the seal, a first gripper ring fitted against the axially outer side of the spacer ring, a second gripper ring fitted against the O-ring seal, the gripper rings having axially and radially inwardly protuding circumferentially spaced gripping teeth, in one embodiment the teeth arranged for providing a twist when subjected to simultaneous rearward axial and rotational forces, and an end bushing holding the gripper rings, spacer bushing, and O-ring wihtin the outer housing.

### DISCLOSURE OF INVENTION

### PROBLEMS TO BE SOLVED BY THE INENTION

According to the background art described above, while it is advantageously possible to prevent the coupling between the retaining member and the joint from slackening over time, there is a problem that the calking must be carried out on site using an apparatus for caulking carried to the site. Further, the regulation ring provided with the regulation member on the side of the inner circumference has a complicated structure, thus adversely increasing the production cost. In addition, as the regulation ring is simply held between the ring member and the tubular member, the force produced by the opening may not be transmitted to the retaining member even when the regulation member opens and presses the outer circumference of the pipe due to the insertion of the pipe, and does not affect the fixation by caulking between the retaining member and the joint main body. Accordingly, there is a disadvantage that only the retaining force by caulking is effective to the fixation.

### MEANS FOR SOLVING THE PROBLEMS

The present invention is contrived in view of the above circumstances, and an object of claim 1 of the present invention is to provide a one touch pipe joint that is provided with: a joint main body having a pipe insertion hole at a center of the joint main body and an engaged portion at an outer circumference of an opening-side end portion; a lock ring holder including: an engagement annular portion within which an engaging portion that is engageable with and detachable from the engaged portion of the joint main body is provided; a recess portion provided for an inner surface of a side wall between the engagement annular portion and an inserting hole at a central portion; and a lock ring holding member that projects from an inner circumference of the inserting hole toward the joint main body; a planar lock ring that is provided between the recess portion of the inner surface of the side wall of the lock ring holder and the opening-side end surface of the joint main body, the planar lock ring being formed by integrally processing a tabular elastic metal member in a plated state, and being configured such that a blade edge is provided, at a side of a central hole, for each of a plurality of locking members defined by long holes provided radially from the central hole to an outer circumference edge portion; an O-ring that is contained in a cut out portion provided by cutting out an inner circumference of the opening-side end surface of the joint main body from a side of the pipe insertion hole; a rubber packing that is fitted into a packing joint hole opening in an inner circumferential surface of the pipe insertion hole provided for the joint main body inner than the cut out portion; and a stopper projection that restricts an entrance of a pipe and is provided so as to project from the inner circumferential surface of the pipe insertion hole of the joint main body, wherein when the pipe is inserted into the pipe insertion hole in a state in which the engaged portion of the joint main body is engaged with and coupled to the engaging portion of the lock ring holder, the blade edges of the plurality of locking members in the central hole of the lock ring bite into the outer circumferential surface against a direction in which the pipe is pulled out, and a front surface of each blade edge presses the O-ring toward the cut out portion, and further the outer circumference edge portion on an opposite side from the blade edge is brought into contact with the inner surface of the side wall of the lock ring holder due to a reactive force produced by the insertion of the pipe, thereby biasing the lock ring holder in a direction opposite to the joint main body.
In view of the prior art in particular the location of the lock ring in a recess of the lock ring holder, an O-ring at the end of the main female part, a rubber packing inside the female part provide an improved water tightness for the touch pipe joint.

The invention of claim 2 is to provide the one touch pipe joint, where the engaged portion engaged portion is constituted as an engagement projection provided for an outer circumference of an expanded portion provided at the opening-side end portion of the joint main body, and the engaging portion is constituted as an opening cut out portion provided within the engagement annular portion of the lock ring holder and an engagement hole provided in a circumferential direction so as to communicate with the opening cut out portion.

The invention of claim 3 is to provide the one touch pipe joint, where the engaged portion is constituted as an external thread provided around a reduction portion provided at the opening-side end portion of the joint, and the engaging portion is constituted as an internal thread provided along the inner circumference of the engagement annular portion of the lock ring holder.

The invention of claim 4 is to provide the one touch pipe joint, where a slanted surface is provided by removing a corner, at the opening-side end surface, of the cut out portion provided for the joint main body.

### EFFECTS OF THE INVENTION

According to claim 1, the pipe and the joint are connected such that the blade edges in the central hole of the lock ring bite into the outer circumferential surface of the pipe only with a single motion in which the pipe is pressed into the central hole of the lock ring holder from its tip end until the pipe is stopped by the stopper projection provided in the pipe insertion hole of the joint, thereby effectively preventing the pipe from being pulled out against a force in the direction in which the pile is pulled out. Accordingly, it is possible to improve work efficiency and prevent the pipe from being pulled out. Further, as the blade edges of the locking members in the central hole of the lock ring moves along with the pipe in an inward direction of the joint main body due to a frictional resistance with the outer circumferential surface of the pipe, the central portion is brought into contact with a corner of the opening-side end surface of the joint main body. Accordingly, the outer circumference edge portion is brought into contact with the recess portion in the inner surface of the side wall of the lock ring holder, and biased in a direction opposite to the joint main body. With this, a biased force in the direction opposite to the joint main body is also produced in an entirety of the lock ring holder, and a force that causes the joint main body and the lock ring holder to move away from each other is produced. Accordingly, a high frictional force, which makes the connection between the engaging portion and the engaged portion firm, is produced at the engaging portion between the engaged portion of the joint main body and the engaging portion of the lock ring holder, thereby advantageously preventing the engagement from slackening. Moreover, as the blade edges of the locking members in the central hole of the lock ring move in the inward direction of the joint main body, the front surface of the blade edges press the O-ring toward the cut out portion. This expands a volume of the O-ring in upward and downward directions of the cut out portion. As a result, the outer circumferential surface of the pipe and the O-ring are brought into closer contact with each other, thereby further improving cutoff performance. Moreover, the lock ring can be formed only by integrally processing the tabular elastic metal member in the plated state and configured such that the blade edge is provided, at the side of the central hole, for each of the plurality of locking members defined by the long holes provided radially from the central hole to the outer circumference edge portion. Accordingly, manufacturing is simple and cost can be largely reduced, in comparison with the conventional technique in which a regulation piece is provided for an inner circumferential surface of a ring in a disc spring shape. Further, as a repelling force that produces a distortion in the lock ring made of an elastic flat plate is used, a large force can act in a direction in which the joint main body and the lock ring holder move away from each other. Accordingly, a frictional resistance between the engaging portion and the engaged portion increased, thereby preventing the engagement between the two members from slackening.

According to claim 2, the engaged portion is constituted as the engagement projection provided for the outer circumference of the expanded portion of the joint main body, and the engaging portion is constituted as the opening cut out portion provided within the engagement annular portion of the lock ring holder and the engagement hole provided in the circumferential direction. Accordingly, the coupling can be easily carried out only by pressing and rotating the engagement projection into the opening cut out portion. Further, in the coupling, as a tip end of the outer circumference edge portion of the lock ring presses the recess portion within the side wall, the lock ring holder and the joint main body are elastically biased in a direction opposite from each other. Accordingly, the frictional force at an engaging surface between the engagement projection and the engagement hole becomes large, thereby advantageously making the engagement firm.

According to claim 3, the engaged portion is constituted as the external thread provided around the reduction portion of the joint main body, and the engaging portion is constituted as the internal thread provided along the inner circumference of the engagement annular portion of the lock ring holder. Accordingly, the coupling can be easily carried out only by a simple operation of threading the external thread and the internal thread, that is, an operation of rotating the lock ring holder. Further, in the coupling, as described above, as the tip end of the outer circumference edge portion of the lock ring presses the recess portion within the side wall, the lock ring holder and the joint main body are elastically biased in the direction opposite from each other. Accordingly, a frictional force at an engaging surface between the external thread and the internal thread increases, thereby advantageously making the engagement firm.

According to claim 4, as the slanted surface is provided by removing the corner, at the opening-side end surface, of the cut out portion provided for the joint main body, a center portion of the slanted lock ring can be contained in a space of the removed corner. Accordingly, an inclination of the lock ring can be made large even when a distance between the opening-side end surface of the joint main body and the inner surface of the lock ring holder, thereby advantageously increasing an elastically biased force produced by a reactive force.

### BEST MODE FOR CARRYING OUT THE INVENTION

The following describes preferred embodiments according to the present invention with reference to the drawings.

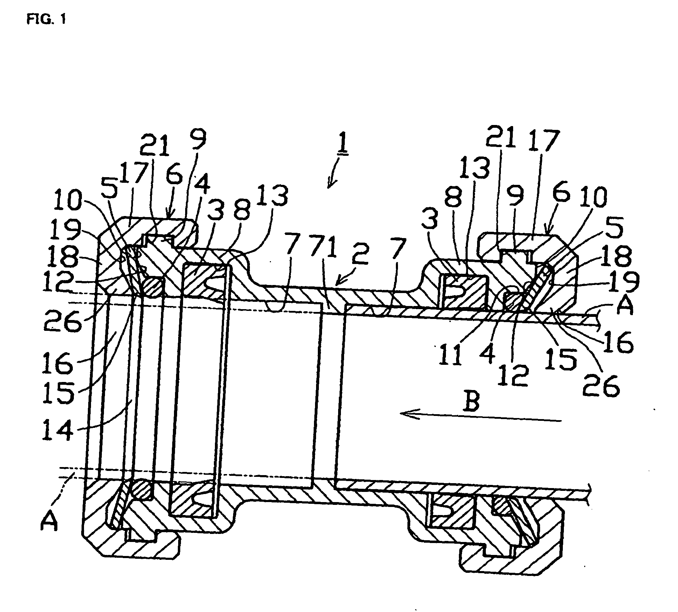

As shown in FIG. 1 to FIG. 3, a one touch pipe joint 1 of a first embodiment according to the present invention is provided with a joint main body 2, a rubber packing 3, an O-ring 4, a lock ring 5, and a lock ring holder 6 as major components.

An outer circumference of an opening-side end portion of a pipe insertion hole 7 at a center of joint main body 2 constitutes an expanded portion 8, and a plurality of engagement projections 9 that engage with lock ring holder 6 are provided at a predetermined interval along an outer circumferential surface of expanded portion 8. Further, a cut out portion 11 in which O-ring 4 is contained is provided for an inner circumference of an opening-side end surface 10 so as to open to pipe insertion hole 7 and opening-side end surface 10, and a slanted surface 12 that extends from cut out portion 11 to opening-side end surface 10 is provided as needed. Slanted surface 12 is provided only to effectively secure a space for containing lock ring 12 provided in a recess portion 19 defined between opening-side end surface 10 of joint main body 2 and an inner surface of lock ring holder 6, with a minimum distance there between, and therefore is not essential. Moreover, the surface can be a circular arc or a different shape instead of the slanted surface. Further, a packing fitting hole 13 is provided for an inner side from cut out portion 11, that is, closer to the middle of joint 2, so as to open in an inner circumferential surface of pipe insertion hole 7. Further, a stopper projection 71 that prevents a pipe A from further entering is provided along the inner circumferential surface at the middle of pipe insertion hole 7, so as to project by an amount of a thickness of the pipe.

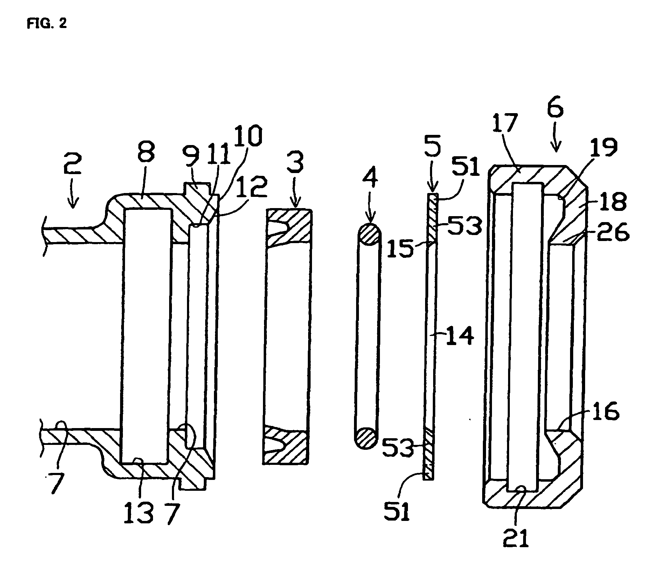

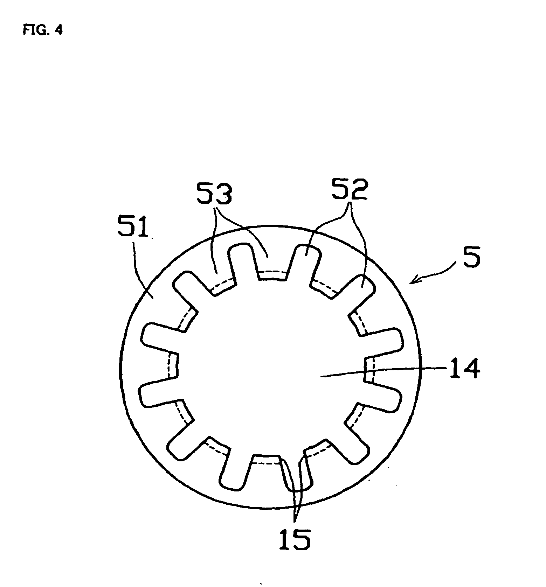

As shown in FIG. 2 and FIG. 4, the lock ring 5 is a planar member formed by integrally processing a tabular elastic metal member in a plated state, and configured such that a blade edge 15 is provided at a side of a central hole 14 of each of a plurality of locking members 53 defined by long holes 52 provided radially from central hole 14 to outer circumference edge portion 51. Accordingly, lock ring 5 itself is substantially in a toroidal shape, and configured such that a diameter of central hole 14 is slightly smaller than an outer diameter of pipe A, and sharp blade edges 15 of locking member 53 are provided along the inner circumference. Each blade edge 15 can have a sliding surface that is slanted toward the inner circumference of central hole 14, but not limited to such a shape. As a material for the elastic circular plate, a metal plate made of such as stainless steel, iron, and materials for springs can be used. Further, while a thickness of lock ring 5 varies depending on the material, a diameter, and an intended purpose, it generally is but not limited to 0.5 mm to 2 mm.

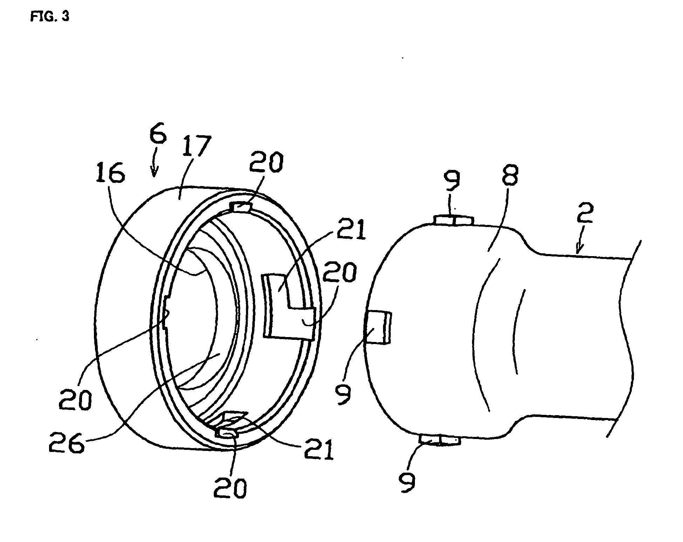

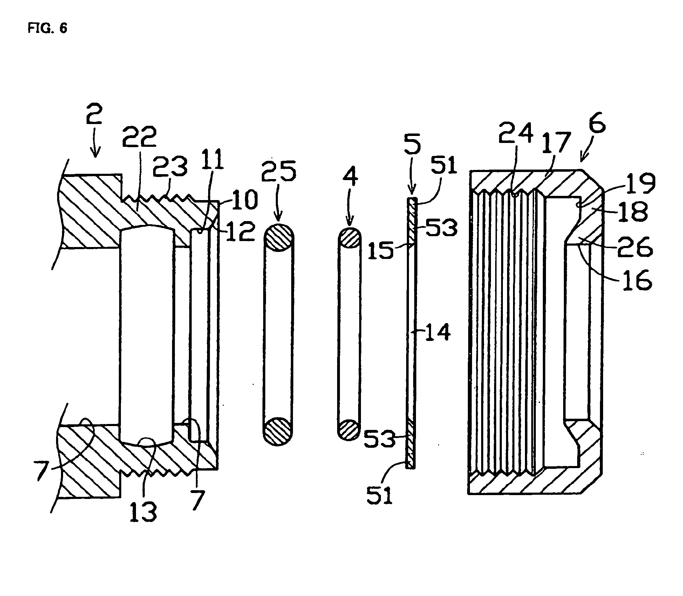

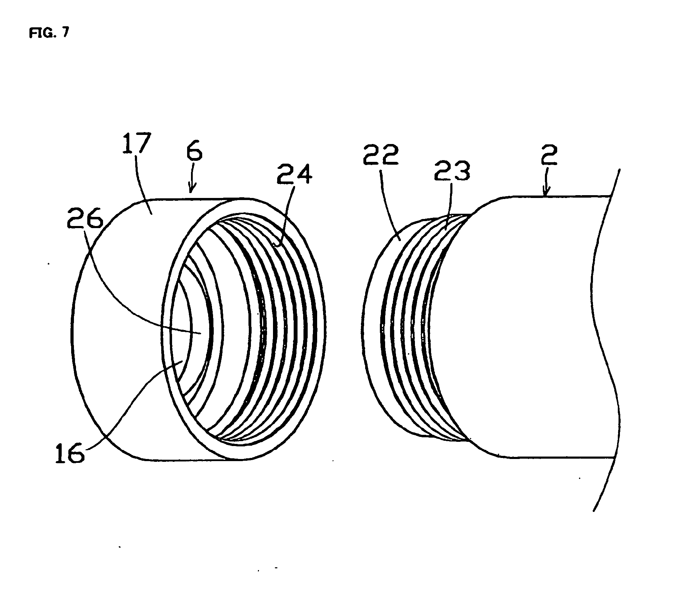

As best shown in FIG. 1 to FIG. 3 and FIG. 5 to FIG. 7, lock ring holder 6 is for bringing lock ring 5 into close contact with end surface 10 of joint main body 2, and serves to receive a reactive force of outer circumference edge portion 51 of an outer circumference of lock ring 5. Lock ring holder 6 is provided with, at a center thereof, an inserting hole 16 through which pipe A can be inserted and whose inner diameter is substantially the same as that of pipe insertion hole 7 of joint main body 2, and, on the outer circumference, a retaining annular portion 17 into which a tip end of expanded portion 8 of joint 2 on the opening side is inserted, thereby engaging with joint 2. Further, an inner surface of a side wall 18 between inserting hole 16 and retaining annular portion 17 is provided with recess portion 19 that can contain and be brought into contact with an outer circumference edge portion 51 of the outer circumference of lock ring 5. Further, an inner circumferential surface of retaining annular portion 17 is, as best shown in FIG. 3, provided with an opening cut out portion 20 that introduces engagement projections 9 provided along the outer circumference of expanded portion 8 of joint 2, and an engagement hole 21 provided continuously from opening cut out portion 20 along a circumferential direction. Further, a lock ring holding member 26 that projects toward joint main body 2 is provided for an inner circumference of inserting hole 16.

Cross sectional shapes and materials of rubber packing 3 and O-ring 4 are not particularly limited, and can be known cross-sectionals shape and materials that are usually used.

When using one touch pipe joint 1 having the above described configuration, as shown in FIG. 1 to FIG. 3, rubber packing 3 is first fitted into packing fitting hole 13 of joint main body 2 from a side of pipe insertion hole 7, and then O-ring 4 is fitted into cut out portion 11. Then, lock ring holder 6 is engaged with joint main body 2 after containing outer circumference edge portion 51 of lock ring 5 within side wall 18 of lock ring holder 6. joint main body 2 and lock ring holder 6 can be engaged only by introducing and rotating engagement projections 9 into opening cut out portion 20 of retaining annular portion 17 in the circumferential direction, thereby locking engagement projections 9 to engagement hole 21 in an insertion direction. With this, as shown by a left portion of FIG. 1, a back surface of each blade edge 15 of lock ring 5, that is, a surface facing away from joint main body 2 is pressed by lock ring holding member 26 of lock ring holder 6 from behind, and a front surface of each blade edge 15 presses and is brought into contact with O-ring 4. At this time, blade edges 15 of locking member 53 of lock ring 5, O-ring 4, and rubber packing 3 are configured to slightly project into pipe insertion hole 7 of joint main body 2. According to the connection in such a state, as the back surface of lock ring 5 is pressed by lock ring holding member 26, a force, which is in an opposite direction from a force acting on joint main body 2 across joint main body 2 with which outer circumference edge portion 51 is brought into contact, acts on outer circumference edge portion 51. With this, a frictional force due to the locking between engagement projections 9 and engagement hole 21 increases, and joint main body 2 and lock ring holder 6 may not easily come apart even at this stage. Therefore, when carrying components that have been assembled in the factory, it is possible to effectively prevent the components from falling apart on the way to the workplace.

After the preparation is completed as described above, as shown by a right portion of FIG. 1, an end portion of pipe A is pressed in a direction of an arrow B into inserting hole 16 of lock ring holder 6, central hole 14 provided for lock ring 5, and pipe insertion hole 7 of joint 2, until the end portion of pipe A stops by being brought into contact with stopper projection 71. With this, when pipe A is pressed into pipe insertion hole 7 of joint main body 2, blade edges 15 of locking member 53 that slightly project from the inner circumferential surface of pipe insertion hole 7 of joint main body 2 and define central hole 14 of lock ring 5 move in the same direction as pipe A moves while sliding against the outer circumferential surface of pipe A as blade edges 15 slightly project into pipe insertion hole 7, thereby causing lock ring 5 to deform in a diameter direction. As a result, outer circumference edge portion 51 elastically biases recess portion 19 of side wall 18 of lock ring holder 6 in a direction opposite to joint main body 2. Then, after the movement stops, blade edges 15 bite into the outer circumference of pipe A and are fixed due the elastic force produced in lock ring 5, and accordingly the force elastically biased in the direction opposite to joint main body 2 of lock ring holder 6 is maintained as it is. With this, the force acting on lock ring holder 6 to move away from joint main body 2 is also maintained, and a large frictional force between engagement projections 9 and engagement hole 21 can be maintained. Therefore, the engagement between joint main body 2 and lock ring holder 6 can remain firm for an extended period of time, without slackening by a vibration or course of time to some extent.

On the other hand, the front surface of lock ring 5, that is, the surface facing toward joint main body 2 presses O-ring 4 toward cut out portion 11 and is brought into contact with O-ring 4. O-ring 4 itself expands toward and is brought into close contact with the outer circumferential surface of pipe A and the inner surface of cut out portion 11 by the volume compressed by the pressing, and thus providing an improved cutoff performance.
Moreover, due to a reactive force produced by pressing the portion that is slightly extended from the inner circumferential surface of pipe insertion hole 7 toward packing fitting hole 13, rubber packing 3 is also brought into close contact with the outer circumferential surface of pipe A and an inner surface of packing fitting hole 13, thereby further improving the cutoff performance. Accordingly, with O-ring 4 and rubber packing 3, it is possible to effectively prevent water from leaking through a gap between the outer circumferential surface of pipe A and pipe insertion hole 7 of joint main body 2.

Further, as blade edges 15 of locking member 53 of lock ring 5 bite into all around the outer circumferential surface of pipe A, lock ring 5 blocks the force applied in the direction in which pipe A is pulled out, and pipe A can be firmly coupled to joint 2.

Disengagement between joint main body 2 and lock ring holder 6 in such as a case in which pipe A is replaced can be carried out only by rotating lock ring holder 6 in an opposite direction from the rotation when engaging to move engagement projections 9 within engagement hole 21, and pulling out lock ring holder 6 when engagement projections 9 reach the position of opening cut out portion 20. With this, inserting hole 16 of lock ring holder 6 slides along the outer circumference of pipe A and moves away from joint main body 2. As joint main body 2 and lock ring holder 6 can be disengaged by this, lock ring 5 is pulled out from joint main body 2 along with pipe A while biting into the outer circumferential surface of pipe A. Then, O-ring 4 and rubber packing 3 are removed from cut out portion 11 and packing fitting hole 13, respectively, and replaced with new ones as needed, and lock ring 5 is also replaced with a new one as needed. Then, as described above, after coupling joint main body 2 and lock ring holder 6, a new pipe A is coupled in the same manner as described above.

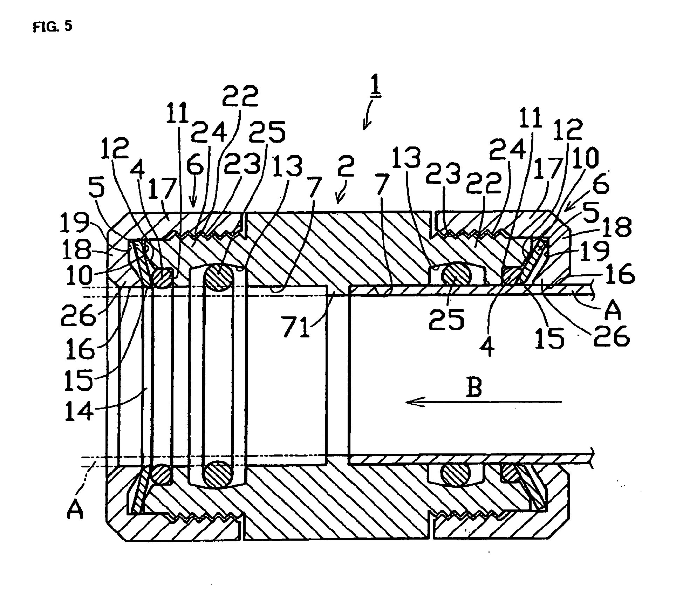

A second embodiment according to the present invention is now described with reference to FIG. 5 to FIG. 7. The second embodiment is different from the first embodiment in that the engagement between joint main body 2 and lock ring holder 6. Accordingly, the description focuses on this part and the like components are represented by the like numerals and not explained.

The outer circumference of the opening-side end portion of pipe insertion hole 7 at the center of joint main body 2 constitutes a reduction portion 22, and an external thread 23 is provided around an outer circumference thereof. Further, the inner circumferential surface of retaining annular portion 17 of lock ring holder 6 through which an opening end portion of reduction portion 22 is inserted is provided with an internal thread 24 that can be threaded with external thread 23. Further, packing fitting hole 13 is provided so as to be laterally long with a central portion being deep, within which a large O-ring 25 that slightly extends from the inner circumferential surface of pipe insertion hole 7 is contained.

When using one touch pipe joint 1 according to the second embodiment having the above described configuration, as shown by a left portion of FIG. 5, similarly to the first embodiment, large O-ring 25 and O-ring 4 are fitted, and the tip end of the outer circumference of lock ring 5 is contained so as to be brought into contact with recess portion 19 of the inner surface of side wall 18 of lock ring holder 6, and then lock ring holder 6 is engaged with joint main body 2. Joint main body 2 and lock ring holder 6 can be engaged by threading and fixing external thread 23 provided around the outer circumference of reduction portion 22 of joint main body 2 and internal thread 24 provided along the inner circumferential surface of retaining annular portion 17 of lock ring holder 6. The effect of this embodiment is the same as described in the first embodiment. Thereafter, as shown by a right portion of FIG. 5, the end portion of pipe A is pressed in a direction of an arrow B into inserting hole 16 of lock ring holder 6, central hole 14 provided for lock ring 5, and pipe insertion hole 7 of joint 2 until the end portion of pipe A stops by being brought into contact with stopper projection 71 of joint main body 2. Also in this case, similarly to the first embodiment, a biased force in the direction opposite to the joint main body 2 acts on outer circumference edge portion 51 of lock ring 5, and side wall 18 is pressed in the same direction, and accordingly, lock ring holder 6 is pressed in the same direction, thereby making a frictional force large at a portion where external thread 23 and internal thread 24 are in contact. As a result, it is possible to provide one touch pipe joint 1 with which the engagement between external thread 23 and internal thread 24 may not become lose easily. Further, it is possible to provide a sufficient cutoff performance by O-ring 4 and large O-ring 25 provided between joint main body 2 and pipe A.

The material of pipe A used for one touch pipe joint 1 according to the present invention is not particularly limited, and can be synthetic resin, soft copper, or brass. Pipe A can also be a hard material like a common stainless steel pipe. In this case, a stainless steel that is harder than the stainless steel pipe is suitably used as the material of lock ring 5. Further, the outer circumferential surface of the end of pipe A is formed into a concave-convex surface so that blade edges 15 of locking member 53 of lock ring 5 can easily bite into pipe A.

### INDUSTRIAL APPLICABILITY

The one touch pipe joint according to the present invention is suitable for use in piping of various pipes having a relatively small diameter such as indoor plumbing and indoor electrical piping, and therefore a huge demand is expected.

### BRIEF DESCRIPTION OF THE DRAWINGS

FIG. 1 is a vertical cross-sectional view of a first embodiment of a one touch pipe joint according to the present invention, a left portion of which shows a state when assembled, and a right portion of which shows a state after a pipe is inserted.
FIG. 2 is an exploded cross-sectional view of joint shown in FIG. 1.
FIG. 3 is a close-up perspective view of a lock ring holder and a joint main body before being connected according to the first embodiment.
FIG. 4 is an elevational view of a lock ring.
FIG. 5 is a vertical cross-sectional view of a second embodiment of the one touch pipe joint according to the present invention, a left portion of which shows the state when assembled, and a right portion of which shows the state after the pipe is inserted.
FIG. 6 is an exploded cross-sectional view of the joint shown in FIG. 5.
FIG. 7 is a close-up perspective view of the lock ring holder and the joint main body before being connected according to the second embodiment.

### Reference Signs List

- 1: ONE TOUCH PIPE JOINT
- 2: JOINT MAIN BODY
- 3: RUBBER PACKING
- 4: O-RING
- 5: LOCK RING
- 6: LOCK RING HOLDER
- 7: PIPE INSERTION HOLE
- 71: STOPPER PROJECTION
- 8: EXPANDED PORTION
- 9: ENGAGEMENT PROJECTION (ENGAGED PORTION)
- 10: OPENING-SIDE END SURFACE
- 11: CUT OUT PORTION
- 12: SLANTED SURFACE
- 13: PACKING FITTING HOLE
- 14: CENTRAL HOLE
- 15: BLADE EDGE
- 17: ENGAGEMENT ANNULAR PORTION
- 16: INSERTING HOLE
- 18: SIDE WALL
- 19: RECESS PORTION
- 20: OPENING CUT OUT PORTION (ENGAGING PORTION)
- 21: ENGAGEMENT HOLE (ENGAGING PORTION)
- 22: REDUCTION PORTION
- 23: EXTERNAL THREAD (ENGAGED PORTION)
- 24: INTERNAL THREAD (ENGAGING PORTION)
- 25: LARGE O-RING
- 26: LOCK RING HOLDING MEMBER
- 51: OUTER CIRCUMFERENCE EDGE PORTION
- 52: LONG HOLE
- 53: LOCKING MEMBER

## Claims

1. A one touch pipe joint (1), comprising:
a joint main body (2) having a pipe insertion hole (7) at a center of the joint main body (2) and an engaged portion (9) at an outer circumference of an opening-side end portion (10);
a lock ring holder (6) including:
an engagement annular portion (17) within which an engaging portion that is engageable with and detachable from the engaged portion (9) of the joint main body (2) is provided;
a recess portion (19) provided for an inner surface of a side wall (18) between the engagement annular portion and an inserting hole (16) at a central portion; and
a lock ring holding member (26) that projects from an inner circumference of the inserting hole (16) toward the joint main body (2);
a planar lock ring (5) that is provided between the recess portion (19) of the inner surface of the side wall of the lock ring holder (6) and the opening-side end surface (10) of the joint main body (2), the planar lock ring (5) being formed by integrally processing a tabular elastic metal member in a plated state, and being configured such that a blade edge (15) is provided, at a side of a central hole (14), for each of a plurality of locking members (53) defined by long holes (52) provided radially from the central hole (14) to an outer circumference edge portion;
an O-ring(4) that is contained in a cut out portion provided by cutting out an inner circumference of the opening-side end surface of the joint main body (2) from a side of the pipe insertion hole (7);
a rubber packing (3) that is fitted into a packing fitting hole (13) opening in an inner circumferential surface of the pipe insertion hole (7) provided for the joint main body (2) more inner than the cut out portion; and
a stopper projection (71) that restricts an entrance of a pipe and is provided so as to project from the inner circumferential surface of the pipe insertion hole (7) of the joint main body (2), wherein
when the pipe is inserted into the pipe insertion hole (7) in a state in which the engaged portion (9) of the joint main body (2) is engaged with and coupled to the engaging portion of the lock ring holder (6), the blade edges (15) of the plurality of locking members (53) in the central hole (14) of the lock ring (5) bite into the outer circumferential surface against a direction in which the pipe is pulled out, and a front surface of each blade edge (15) presses the O-ring (4) toward the cut out portion (11), and further the outer circumference edge portion (51) on an opposite side from the blade edge (15) is brought into contact with the inner surface of the side wall of the lock ring holder (6) due to a reactive force produced by the insertion of the pipe, thereby biasing the lock ring holder (6) in a direction opposite to the joint main body (2).

2. The one touch pipe joint (1) according to claim 1, wherein
the engaged portion (9) is constituted as an engagement projection provided for an outer circumference of an expanded portion (8) provided at the opening-side end portion of the joint main body (2), and the engaging portion is constituted as an opening cut out portion provided within the engagement annular portion of the lock ring holder (6) and an engagement hole provided in a circumferential direction so as to communicate with the opening cut out portion.

3. The one touch pipe joint (1) according to claim 1, wherein
the engaged portion (9) is constituted as an external thread provided around a reduction portion (22) provided at the opening-side end portion of the joint main body (2), and the engaging portion is constituted as an internal thread provided along the inner circumference of the engagement annular portion of the lock ring holder (6).

4. The one touch pipe joint (1) according to any one of claims 1 to 3, wherein
a slanted surface is provided by removing a corner, at the opening-side end surface, of the cut out portion provided for the joint main body (2).

## Patentansprüche

1. Schnellverbindung für eine Rohrleitung (1), umfassend:
einen Verbindungshauptkörper (2), der ein Rohrleitungs-Einführloch (7) an einer Mitte des Verbindungshauptkörpers (2) und einen in Eingriff stehenden Abschnitt (9) an einem Außenumfang eines offenseitigen Endabschnitts (10) aufweist;
einen Verschlussringhalter (6), umfassend:
einen ringförmigen Eingriffsabschnitt (17), in dem ein eingreifender Abschnitt bereitgestellt ist, der in den in Eingriff stehenden Abschnitt (9) des Verbindungshauptkörpers (2) eingreifen kann und von diesem gelöst werden kann;
einen Ausnehmungsabschnitt (19), der für eine Innenfläche einer Seitenwand (18) zwischen dem ringförmigen Eingriffsabschnitt und
einem Einführloch (16) an einem Mittelabschnitt bereitgestellt ist; und
ein Verschlussring-Halteelement (26), das von einem Innenumfang des Einführlochs (16) zum Verbindungshauptkörper (2) hin vorspringt;
einen ebenen Verschlussring (5), der zwischen dem Ausnehmungsabschnitt (19) der Innenfläche der Seitenwand des Verschlussringhalters (6) und der offenseitigen Endfläche (10) des Verbindungshauptkörpers (2) bereitgestellt ist, wobei der ebene Verschlussring (5) durch einstückiges Verarbeiten eines flachen elastischen Metallelements in einem plattierten Zustand gebildet wird und wobei er so ausgestaltet ist, dass eine Blattkante (15) auf Seite eines Mittellochs (14) für jedes von einer Vielzahl von Verriegelungselementen (53) bereitgestellt wird, die von Langlöchern (52) bestimmt werden, die radial vom Mittelloch (14) zu einem Außenumfang-Kantenabschnitt bereitgestellt sind;
einen O-Ring (4), der in einem ausgeschnittenen Abschnitt enthalten ist, der durch Ausschneiden eines Innenumfangs der offenseitigen Endfläche des Verbindungshauptkörpers (2) von Seite des Rohrleitungs-Einführlochs (7) bereitgestellt wird;
eine Gummidichtung (3), die in ein Dichtungspassloch (13) eingepasst ist, das sich in einem Innenumfang des Rohrleitungs-Einführlochs (7), das für den Verbindungshauptkörper (2) bereitgestellt ist, weiter innen liegend als der ausgeschnittene Abschnitt öffnet; und
einen Anschlagvorsprung (71), der einen Eintritt einer Rohrleitung beschränkt und so bereitgestellt ist, dass er von dem Innenumfang des Rohrleitungs-Einführlochs (7) des Verbindungshauptkörpers (2) vorspringt, wobei
wenn die Rohrleitung in das Rohrleitungs-Einführloch (7) eingeführt ist, und zwar in einem Zustand, in dem der in Eingriff stehende Abschnitt (9) des Verbindungshauptkörpers (2) mit dem eingreifenden Abschnitt des Verschlussringhalters (6) in Eingriff steht und verkoppelt ist, beißen die Blattkanten (15) von der Vielzahl der Verriegelungselemente (53) im Mittelloch (14) des Verschlussrings (5) in die Außenumfangfläche gegen eine Richtung, in die die Rohrleitung herausgezogen wird, und eine vordere Fläche jeder Blattkante (15) drückt den O-Ring (4) zum ausgeschnittenen Abschnitt (11), und ferner wird der Außenumfang-Kantenabschnitt (51) auf einer gegenüberliegenden Seite der Blattkante (15) mit der Innenfläche der Seitenwand des Verschlussringhalters (6) aufgrund einer Zwangskraft, die durch das Einführen der Rohrleitung erzeugt wird, in Kontakt gebracht, wobei der Verschlussringhalter (6) in eine dem Verbindungshauptkörper (2) entgegengesetzte Richtung vorgespannt wird.

2. Schnellverbindung für eine Rohrleitung (1) nach Anspruch 1, wobei der in Eingriff stehende Abschnitt (9) als Eingriffsvorsprung ausgebildet ist, der für einen Außenumfang eines erweiterten Abschnitts (8) bereitgestellt ist, der am offenseitigen Endabschnitt des Verbindungshauptkörpers (2) bereitgestellt ist, und der eingreifende Abschnitt als sich öffnender ausgeschnittener Abschnitt, der im ringförmigen Eingriffsabschnitt des Verschlussringhalters (6) bereitgestellt ist, und als Eingriffsloch ausgebildet ist, das in einer Umfrangsrichtung bereitgestellt ist, so dass es mit dem sich öffnenden ausgeschnittenen Abschnitt in Verbindung steht.

3. Schnellverbindung für eine Rohrleitung (1) nach Anspruch 1, wobei
der in Eingriff stehende Abschnitt (9) als Außengewinde ausgebildet ist, das rund um einen Reduzierabschnitt (22) bereitgestellt ist, der am offenseitigen Endabschnitt des Verbindungshauptkörpers (2) bereitgestellt ist, und der eingreifende Abschnitt als Innengewinde ausgebildet ist, das entlang dem Innenumfang des ringförmigen Eingriffsabschnitts des Verschlussringhalters (6) bereitgestellt ist.

4. Schnellverbindung für eine Rohrleitung (1) nach einem der Ansprüche 1 bis 3, wobei
eine abgeschrägte Fläche an der offenseitigen Endfläche durch Entfernen einer Ecke des ausgeschnittenen Abschnitts bereitgestellt wird, der für den Verbindungshauptkörper (2) bereitgestellt ist.

## Revendications

1. Raccord de tuyauterie pouvant être installé en une seule action (1), comprenant :
un corps principal de raccordement (2) ayant un trou d'insertion de tuyauterie (7) au centre du corps principal de raccordement (2) et une portion mise en prise (9) sur une circonférence extérieure d'une portion d'extrémité côté ouverture (10) ;
un élément de retenue de bague de blocage (6) comprenant :
une portion annulaire de mise en prise (17) à l'intérieur de laquelle une portion de mise en prise, qui peut être mise en prise avec, et détachée de, la portion mise en prise (9) du corps principal de raccordement (2), est réalisée ;
une portion de creux (19) réalisée pour une surface intérieure d'une paroi latérale (18) entre la portion annulaire de mise en prise et un trou d'insertion (16) dans une portion centrale ; et
un élément retenant la bague de blocage (26) qui fait saillie à partir d'une circonférence intérieure du trou d'insertion (16) vers le corps principal de raccordement (2) ;
une bague de blocage plane (5) qui est réalisée entre la portion de creux (19) de la surface intérieure de la paroi latérale de l'élément de retenue de bague de blocage (6) et la surface d'extrémité côté ouverture (10) du corps principal de raccordement (2),
la bague de blocage plane (5) étant formée en traitant intégralement un élément métallique élastique tabulaire dans un état plaqué, et configurée de sorte qu'un bord de lame (15) est réalisé, sur un côté d'un trou central (14), pour chacun d'une pluralité d'éléments de blocage (53) définis par des trous longs (52) réalisés radialement à partir du trou central (14) vers une portion de bord de circonférence extérieure ;
un joint torique (4) qui est contenu dans une portion découpée réalisée en découpant une circonférence intérieure de la surface d'extrémité côté ouverture du corps principal de raccordement (2) à partir d'un côté du trou d'insertion de tuyauterie (7) ;
une garniture en caoutchouc (3) qui est montée dans un trou de montage de garniture (13) ouvrant dans une surface circonférentielle intérieure du trou d'insertion de tuyauterie (7) réalisée pour le corps principal de raccordement (2) de façon plus intérieure que la portion découpée ; et
une saillie de butée (71) qui limite l'introduction d'une tuyauterie et qui est réalisée de façon à faire saillie à partir de la surface circonférentielle intérieure du trou d'insertion de tuyauterie (7) du corps principal de raccordement (2), dans lequel,
quand la tuyauterie est insérée dans le trou d'insertion de tuyauterie (7) dans un état dans lequel la portion mise en prise (9) du corps principal de raccordement (2) est mise en prise avec, et couplée à, la portion de mise en prise de l'élément de retenue de bague de blocage (6), les bords de lame (15) de la pluralité d'éléments de blocage (53) dans le trou central (14) de la bague de blocage (5) mordent dans la surface circonférentielle extérieure contre une direction dans laquelle la tuyauterie est extraite, et une surface frontale de chaque bord de lame (15) presse le joint torique (4) vers la portion découpée (11), et également la portion de bord de circonférence extérieure (51) sur un côté opposé du bord de lame (15) est amenée en contact avec la surface intérieure de la paroi latérale de l'élément de retenue de bague de blocage (6) du fait d'une force de réaction produite par l'insertion de la tuyauterie, poussant ainsi l'élément de retenue de bague de blocage (6) dans une direction opposée au corps principal de raccordement (2).

2. Raccord de tuyauterie pouvant être installé en une seule action (1) selon la revendication 1, dans lequel
la portion mise en prise (9) est constituée en tant que saillie de mise en prise réalisée pour une circonférence extérieure d'une portion dilatée (8) réalisée au niveau de la portion d'extrémité côté ouverture du corps principal de raccordement (2), et la portion de mise en prise est constituée en tant que portion découpée d'ouverture réalisée à l'intérieur de la portion annulaire de mise en prise de l'élément de retenue de bague de blocage (6) et d'un trou de mise en prise réalisé dans une direction circonférentielle de façon à communiquer avec la portion découpée d'ouverture.

3. Raccord de tuyauterie pouvant être installé en une seule action (1) selon la revendication 1, dans lequel
la portion mise en prise (9) est constituée en tant que filet externe réalisé autour d'une portion de réduction (22) réalisée au niveau de la portion d'extrémité côté ouverture du corps principal de raccordement (2), et la portion de mise en prise est constituée en tant que filet interne réalisé le long de la circonférence intérieure de la portion annulaire de mise en prise de l'élément de retenue de bague de blocage (6).

4. Raccord de tuyauterie pouvant être installé en une seule action (1) selon l'une quelconque des revendications 1 à 3, dans lequel
une surface inclinée est réalisée en retirant un coin, au niveau de la surface d'extrémité côté ouverture, de la portion découpée réalisée pour le corps principal de raccordement (2).
